# EUROPÄISCHE PATENTANMELDUNG

(11) **EP 4 454 875 A1**
(43) Veröffentlichungstag der Anmeldung: **30.10.2024**
(21) Anmeldenummer: 24160963.5
(22) Anmeldetag: 01.03.2024
(51) Int. Cl.: B30B 11/00, G06N 20/00, G06N 3/08, B30B 15/26, B30B 11/08, B30B 15/00

(54) **VERFAHREN ZUM BEWERTEN DES VERSCHLEISSZUSTANDS EINER KOMPONENTE EINER RUNDLÄUFERPRESSE SOWIE RUNDLÄUFERPRESSE**

(30) Priorität: 26.04.2023 DE 102023110808
(71) Anmelder: Fette Compacting GmbH, 21493 Schwarzenbek (DE)
(72) Erfinder: Vulp, Sven, 21514 Klein Pampau (DE); Gäth, Jochen, 19258 Schwanheide (DE); Novikova, Anna, 22609 Hamburg (DE)
(74) Vertreter: Hauck Patentanwaltspartnerschaft mbB

(57) **Zusammenfassung**

Die Erfindung betrifft ein Verfahren zum Bewerten des Verschleißzustands einer Komponente einer Rundläuferpresse, wobei die Rundläuferpresse einen mittels eines Drehantriebs drehbaren Rotor umfasst, wobei der Rotor eine obere Stempelführung für obere Pressstempel und eine untere Stempelführung für untere Pressstempel sowie eine zwischen den Stempelführungen angeordnete Matrizenscheibe aufweist, wobei die Pressstempel mit Kavitäten der Matrizenscheibe zusammenwirken, wobei die Rundläuferpresse weiter eine Fülleinrichtung umfasst, durch die zu verpressendes Pulvermaterial in die Kavitäten der Matrizenscheibe gefüllt wird, wobei die Rundläuferpresse eine Druckeinrichtung umfasst, die im Betrieb mit den oberen Pressstempeln und mit den unteren Pressstempeln zum Verpressen des Pulvermaterials in den Kavitäten der Matrizenscheibe zu Presslingen zusammenwirkt, und wobei die Rundläuferpresse mit Stempelköpfen der Pressstempel zusammenwirkende Steuerkurven zum Steuern einer axialen Bewegung der Pressstempel aufweist, wobei die Steuerkurven eine Auswerferkurve umfassen, die die unteren Pressstempel zum Auswerfen von in den Kavitäten erzeugten Presslingen aus den Kavitäten steuern. Die Erfindung betrifft außerdem eine Rundläuferpresse.

## Beschreibung

Die Erfindung betrifft ein Verfahren zum Bewerten des Verschleißzustands einer Komponente einer Rundläuferpresse, wobei die Rundläuferpresse einen mittels eines Drehantriebs drehbaren Rotor umfasst, wobei der Rotor eine obere Stempelführung für obere Pressstempel und eine untere Stempelführung für untere Pressstempel sowie eine zwischen den Stempelführungen angeordnete Matrizenscheibe aufweist, wobei die Pressstempel mit Kavitäten der Matrizenscheibe zusammenwirken, wobei die Rundläuferpresse weiter eine Fülleinrichtung umfasst, durch die zu verpressendes Pulvermaterial in die Kavitäten der Matrizenscheibe gefüllt wird, wobei die Rundläuferpresse eine Druckeinrichtung umfasst, die im Betrieb mit den oberen Pressstempeln und mit den unteren Pressstempeln zum Verpressen des Pulvermaterials in den Kavitäten der Matrizenscheibe zu Presslingen zusammenwirkt, und wobei die Rundläuferpresse mit Stempelköpfen der Pressstempel zusammenwirkende Steuerkurven zum Steuern einer axialen Bewegung der Pressstempel aufweist, wobei die Steuerkurven eine Auswerferkurve umfassen, die die unteren Pressstempel zum Auswerfen von in den Kavitäten erzeugten Presslingen aus den Kavitäten steuern.

Die Erfindung betritt außerdem eine Rundläuferpresse, umfassend einen Rotor mit einer oberen Stempelführung für obere Pressstempel und einer unteren Stempelführung für untere Pressstempel sowie einer zwischen den Stempelführungen angeordneten Matrizenscheibe, wobei die Pressstempel mit Kavitäten der Matrizenscheibe zusammenwirken, weiter umfassend eine Fülleinrichtung, durch die zu verpressendes Pulvermaterial in die Kavitäten der Matrizenscheibe gefüllt wird, weiter umfassend eine Druckeinrichtung, die im Betrieb mit den oberen Pressstempeln und mit den unteren Pressstempeln zum Verpressen des Pulvermaterials in den Kavitäten der Matrizenscheibe zu Presslingen zusammenwirkt, und weiter umfassend mit Stempelköpfen der Pressstempel zusammenwirkende Steuerkurven zum Steuern einer axialen Bewegung der Pressstempel, wobei die Steuerkurven eine Auswerferkurve umfassen, die die unteren Pressstempel zum Auswerfen von in den Kavitäten erzeugten Presslingen aus den Kavitäten steuern.

In Rundläuferpressen ist regelmäßig eine Vielzahl von oberen und unteren Pressstempeln vorgesehen, die paarweise jeweils einer Kavität einer Matrizenscheibe zugeordnet sind. Im Betrieb der Rundläuferpresse drehen die oberen und unteren Pressstempel gemeinsam mit der Matrizenscheibe, wobei ihre axiale Bewegung durch Steuerkurven gesteuert und durch obere und untere Stempelführungen geführt wird. Im Zuge der Drehung durchläuft die Matrizenscheibe verschiedene Einrichtungen der Rundläuferpresse, nämlich eine Fülleinrichtung, in der zu verpressendes Pulvermaterial in die Kavitäten der Matrizenscheibe geführt wird und eine Druckeinrichtung, in der die oberen und unteren Pressstempel in der Regel durch obere und untere Druckrollen zum Verpressen des Pulvermaterials zu Presslingen, wie Tabletten, in die Kavitäten gedrückt werden. Nachfolgend zu der Druckeinrichtung werden die oberen Pressstempel nach oben aus den Kavitäten geführt und die in den Kavitäten erzeugten Presslinge werden durch die unteren Pressstempel auf die Oberseite der Matrizenscheibe geschoben. Hierfür sind Auswerferkurven vorgesehen, die die unteren Pressstempel entsprechend nach oben bewegen. Beispielsweise durch einen Abstreifer werden die Presslinge anschließend von der Matrizenscheibe in einen Ausgang der Rundläuferpresse abgestreift, von wo sie einer weiteren Verarbeitung zugeführt werden.

Rundläuferpressen werden mit hohen Rotordrehzahlen und entsprechend hohen Produktionsgeschwindigkeiten betrieben. Im Zuge der entsprechend großen Anzahl von Pressvorgängen kommt es zu Verschleiß verschiedener Komponenten der Rundläuferpresse, insbesondere auch der Steuerkurven, und hier besonders der Auswerferkurven, die im Zuge des Kontakts mit den Pressstempeln einer besonderen Belastung unterliegen. Auch Kontakt mit zu verpressendem Pulvermaterial kann zu einem entsprechenden Verschleiß führen. Komponenten mit erhöhtem Verschleiß können zu einer Verschlechterung der Presslingsqualität führen. Beispielsweise Auswerferkurven mit erhöhtem Verschleiß können dazu führen, dass verursachte Defekte nicht bei der Aussortierung erkannt werden und Schlechttabletten entsprechend nicht aussortiert werden. Bislang wird der Verschleißzustand vieler Komponenten der Rundläuferpresse, insbesondere der Auswerferkurven, bei vorgegebenen Wartungsintervallen geprüft, in der Regel manuell durch eine Bedienperson. Nachteilig hieran ist, dass zwischenzeitlich auftretender Verschleiß, der bereits zu einer Beeinträchtigung der Tablettenqualität führen kann, möglicherweise nicht rechtzeitig erkannt wird. Auch ist eine manuelle Verschleißkontrolle aufwendig und nicht zuverlässig reproduzierbar.

Ausgehend von dem erläuterten Stand der Technik liegt der Erfindung daher die Aufgabe zugrunde, ein Verfahren und eine Rundläuferpresse der eingangs genannten Art bereitzustellen, mit denen der Verschleißzustand von Komponenten der Rundläuferpresse zuverlässig, rechtzeitig und reproduzierbar bewertet werden kann.

Die Erfindung löst die Aufgabe durch die unabhängigen Ansprüche 1 und 13. Vorteilhafte Ausgestaltungen finden sich in den abhängigen Ansprüchen, der Beschreibung und den Figuren.

Für ein Verfahren der eingangs genannten Art löst die Erfindung die Aufgabe durch die Schritte:
- mit mindestens einem Kraftsensor werden im Betrieb der Rundläuferpresse auf die Auswerferkurve wirkenden Ausstoßkräfte als Messwerte gemessen und/oder mit mindestens einem Vibrationssensor werden im Betrieb der Rundläuferpresse auftretende Vibrationen als Messwerte gemessen,
- die Messwerte werden einer Auswerteeinrichtung zugeführt und durch die Auswerteeinrichtung wird auf Grundlage der erhaltenen Messwerte der Verschleißzustand einer Komponente der Rundläuferpresse bewertet.

Für eine Rundläuferpresse der eingangsgenannten Art löst die Erfindung die Aufgabe dadurch,
- dass die Rundläuferpresse mindestens einen Kraftsensor umfasst, mit dem im Betrieb der Rundläuferpresse auf die Auswerferkurve wirkenden Ausstoßkräfte als Messwerte messbar sind und/oder dass die Rundläuferpresse mindestens einen Vibrationssensor umfasst, mit dem im Betrieb der Rundläuferpresse auftretende Vibrationen als Messwerte messbar sind, und
- dass eine Auswerteeinrichtung vorgesehen ist, an der die Messwerte anliegen, und die dazu ausgebildet ist, auf Grundlage der erhaltenen Messwerte den Verschleißzustand einer Komponente der Rundläuferpresse zu bewerten.

Der grundsätzliche Aufbau der Rundläuferpresse, wie sie Gegenstand der vorliegenden Erfindung ist bzw. beim erfindungsgemäßen Verfahren zum Einsatz kommt, wurde eingangs erläutert. Wie erläutert führen die oberen und unteren Stempelführungen die Pressstempel bei ihrer axialen Bewegung. Die Stempelköpfe wirken mit Steuerkurven zusammen, die die Pressstempel im Zuge ihrer Drehung mit dem Rotor in Axialrichtung bewegen, insbesondere aufeinander zu und voneinander weg. Die Steuerkurven sind in der Regel aus mehreren Steuerkurvenelementen aufgebaut. Sie können die Stempelköpfe in entsprechenden Führungsaufnahmen aufnehmen oder nur an einer Spiegelfläche der Stempelköpfe anliegen. Die Druckeinrichtung umfasst in der Regel eine obere Druckrolle und eine untere Druckrolle, die mit den Stempelköpfen der oberen bzw. unteren Pressstempel zusammenwirken. Auch können mehrere Druckeinrichtungen dieser Art vorgesehen sein, zum Beispiel Vordruckeinrichtungen und Hauptdruckeinrichtungen. Die Auswerferkurve als Teil der Steuerkurven bewegt die unteren Pressstempel nach dem Erzeugen der Presslinge in der jeweiligen Kavität nach oben, so dass der jeweilige Pressling auf die Oberseite der Matrizenscheibe gelangt, von wo er in einen Tablettenausgang geleitet werden kann, beispielsweise durch einen stationär oberhalb der Matrizenscheibe angeordneten Abstreifer.

Erfindungsgemäß werden als Messwerte im Betrieb der Rundläuferpresse mit mindestens einem Kraftsensor die auf die Auswerferkurve wirkenden Ausstoßkräfte und/oder mit mindestens einem Vibrationssensor im Betrieb der Rundläuferpresse auftretende Vibrationen gemessen. Die Messwerte werden einer Auswerteeinrichtung zugeführt. Die Auswerteeinrichtung bewertet auf Grundlage der erhaltenen Messwerte den Verschleißzustand einer Komponente der Rundläuferpresse. Bei der Komponente handelt es sich insbesondere um eine der vorgenannten Komponenten der Rundläuferpresse. Beispielsweise kann es sich bei der Komponente um ein Steuerkurvenelement, zum Beispiel eine Auswerferkurve, handeln. Die Erfindung basiert auf der Erkenntnis, dass sich ein Verschleiß einer Komponente der Rundläuferpresse insbesondere durch eine Veränderung der Ausstoßkräfte an der Auswerferkurve und/oder eine Veränderung der im Betrieb der Rundläuferpresse auftretenden Vibrationen zeigt. Dabei kann auch eine Kombinationsmessung sinnvoll sein derart, dass sowohl die mit einem Kraftsensor gemessenen Ausstoßkräfte als auch die mit einem Vibrationssensor gemessenen Vibrationen als Messwerte erfasst und durch die Auswerteeinrichtung ausgewertet werden. Sofern beide Arten von Messwerten aufgenommen werden, können diese jeweils in der vorstehend und nachstehend noch erläuterten Weise ausgewertet werden. Zum Beispiel bei einem Vergleich der aufgenommenen Messwerte mit Referenzwerten erfolgt dann ein Vergleich der Messwerte zu den Ausstoßkräften mit Referenzwerten zu den Ausstoßkräften und ein Vergleich der Messwerte zu den Vibrationen mit Referenzwerten zu den Vibrationen. Die Bewertung des Verschleißzustands kann dann auf Grundlage von beiden Arten von Messwerten erfolgen. Zum Beispiel kann ein erhöhter Verschleiß der Komponente festgestellt werden, wenn eine oder wenn beide Arten der aufgenommenen Messwerte von entsprechenden Referenzwerten abweichen. Gerade wenn beide Arten von Messwerten aufgenommen und ausgewertet werden, können zum Beispiel auf eine der Messwertarten wirkende Einflussfaktoren berücksichtigt bzw. eliminiert werden, die zwar zu einer Veränderung der entsprechenden Messwerte führen, aber nicht aufgrund eines veränderten Verschleißzustands. Beispielhaft genannt sei eine Änderung der Steghöhe, also der Höhe der in den Kavitäten erzeugten Presslinge, oder der Eintauchtiefe der Pressstempel, insbesondere der oberen Pressstempel, in die Kavitäten oder der unteren Pressstempel beim Ausstoßen der Presslinge aus den Kavitäten, die sich insbesondere auf die Ausstoßkräfte auswirken. Bei einer zusätzlichen Berücksichtigung der Vibrationssignale können solche, dem Verschleißzustand nicht zugeordnete Einflussfaktoren erkannt und eliminiert werden.

Die Auswerteeinrichtung kann Teil der Rundläuferpresse sein. Beispielsweise kann die Auswerteeinrichtung in die Maschinensteuerung der Rundläuferpresse integriert sein. Sie kann aber auch getrennt von der Rundläuferpresse ausgebildet sein, beispielsweise auf einem von der Rundläuferpresse getrennten Computer, einem Tablet oder einem Smartphone oder auf einem von der Rundläuferpresse getrennten Server, beispielsweise im Rahmen einer Cloud-Lösung.

Die Erfindung erlaubt eine Vorhersage zum Verschleißgrad von Komponenten der Rundläuferpresse, insbesondere in Echtzeit. Dies erfolgt in einfacher und zuverlässiger Weise über die Nutzung von Messsignalen zur Ausstoßkraft an der Auswerferkurve und/oder zu Vibrationen der Rundläuferpresse. Indem die erfindungsgemäße Bewertung des Verschleißzustands unabhängig von Wartungsintervallen erfolgen kann, insbesondere fortlaufend im Betrieb der Rundläuferpresse, kann ein erhöhter Verschleiß rechtzeitig erkannt werden. Die Prozessstabilität wird erhöht, ungeplante Ausfälle der Rundläuferpresse werden minimiert. Gleichzeitig können Qualitätsmerkmale der hergestellten Presslinge nachhaltig optimiert werden. Die erfindungsgemäße Bewertung ist unabhängig von individuellen Einschätzungen von Bedienpersonen und damit zuverlässig objektiv reproduzierbar.

Die Auswerteeinrichtung kann eine Eingabeeinrichtung und/oder eine Anzeigeeinrichtung aufweisen. Diese können in die Auswerteeinrichtung integriert sein oder getrennt von dieser ausgebildet sein, zum Beispiel in einem PC, Tablet oder Smartphone, insbesondere per App (Applikation).

Besonders geeignet sind die erfindungsgemäß aufgenommenen Messwerte für die Bewertung des Verschleißzustands der Auswerferkurve. Auch ist die Auswerferkurve hinsichtlich der Bewertung des Verschleißzustands von Relevanz, da bislang keine automatische Überwachung des Zustands der Auswerferkurve erfolgt. Lediglich eine manuelle Überprüfung im Rahmen von vorgegebenen Wartungsintervallen wird durchgeführt. Erfindungsgemäß ist erkannt worden, dass über die Ausstoßkraft und die Vibrationssignale ein Verschleiß der Auswerferkurve zuverlässig erkannt werden kann.

Der die Messwerte zur Ausstoßkraft aufnehmende Kraftsensor kann an der Auswerferkurve angeordnet sein. Bereits derzeit sind häufig entsprechende Kraftsensoren zum Messen der Ausstoßkraft an den Auswerferkurven angeordnet. Diese werden aber bislang nicht für eine Verschleißerkennung genutzt. Als Kraftsensor kann zum Beispiel ein Kraftaufnehmer an der Auswerferkrueve montiert sein. Der Kraftaufnehmer kann zum Beispiel einen Biegebalken mit Dehnungsmessstreifen und gegebenenfalls integriertem Messverstärker umfassen. Der beispielsweise unterhalb der Ausstoßkurve angeordnete Kraftaufnehmer wird durch die von dem ausgestoßenen Stempel übertragenen Kräfte ausgelenkt. Anhand dieser Auslenkung kann die Ausstoßkraft ermittelt werden.

Nach einer weiteren Ausgestaltung kann vorgesehen sein, dass ein Vibrationssensor an der Auswerferkurve und/oder an der Druckeinrichtung, insbesondere einer oberen und/oder unteren Druckrolle der Druckeinrichtung und/oder an einer oberen und/oder unteren Halterung der oberen und/oder unteren Druckrolle, und/oder an einer Dosierkurve der Steuerkurven zum Dosieren des in die Kavitäten der Matrizenscheibe gefüllten Pulvermaterials angeordnet ist. Es können somit ein oder mehrere Vibrationssensoren zum Aufnehmen der im Betrieb der Rundläuferpresse auftretenden Vibrationen als Messwerte vorgesehen sein. Beispielsweise ein Vibrationssensor an der Auswerferkurve, zum Beispiel an einem Kraftaufnehmer, zum Beispiel an einem Biegemessbalken eines Kraftaufnehmers, misst unmittelbar die an der Auswerferkurve auftretenden Vibrationen und kann somit eine besonders direkte Information über den Verschleißzustand der Auswerferkurve liefern. Es wurde durch die Erfinder aber festgestellt, dass auch Vibrationssignale an Dosierkurvenelementen, also Steuerkurvenelementen, die die Höhe der Unterstempel beim Befüllen der Kavitäten mit Pulvermaterial steuern (dosieren) und an Druckrollen der Druckeinrichtung eine Information über den Verschleißzustand an anderer Stelle der Rundläuferpresse angeordneter Komponenten, insbesondere der Auswerferkurve, bereitstellen. Auch eine Anordnung und Nutzung mehrerer Vibrationssensoren kann sinnvoll sein. Auf diese Weise können gegebenenfalls für den Verschleißzustand nicht relevante andere Effekte identifiziert und in der Auswertung eliminiert werden.

Die Messwerte können als Messwertkurve aufgenommen werden, insbesondere als zeitabhängige Messwertkurve. Beispielsweise können die Messwerte aufgenommen werden als Messwertkurve, aufgetragen über der Zeit, der Geschwindigkeit oder der Beschleunigung. Das Auftragen der Messwerte als Messwertkurve kann bereits durch die Kraft- oder Vibrationssensoren erfolgen oder es können einzelne durch die Kraft- oder Vibrationssensoren bereitgestellte Messwerte durch die Auswerteeinrichtung zu entsprechenden Messwertkurven aufgenommen werden. Aus einer Veränderung insbesondere des zeitlichen Verlaufs der aufgenommenen Messwerte kann eine besonders zuverlässige Information über den Verschleißzustand der Komponente gewonnen werden.

In besonders praxisgemäßer Weise kann der Verschleißzustand der Komponente durch die Auswerteeinrichtung auf Grundlage eines Vergleichs der erhaltenen Messwerte mit Referenzwerten bewertet werden. Als Referenzwerte kommen zum Beispiel Messwerte im Betrieb der Rundläuferpresse bei einer neuen entsprechenden Komponente infrage, zum Beispiel einer neuen Ausstoßkurve. Diese Referenzwerte bilden Sollwerte, mit denen die später im Betrieb der Rundläuferpresse gewonnenen Messwerte verglichen werden können. Die Referenzwerte können historische Daten der jeweils bewerteten Rundläuferpresse sein oder Daten, die in einer Datenbank hinterlegt sind, und beispielsweise für den Typ der jeweiligen Rundläuferpresse hinterlegt sind. Aus dem Ermitteln einer Abweichung der aktuell aufgenommenen Messwerte mit den Referenzwerten können entsprechend Rückschlüsse über den Verschleißzustand der jeweiligen Komponente gezogen werden. Ein Einfluss anderer, für den Verschleißzustand nicht relevanter Faktoren, wie zum Beispiel einer Steghöhe oder einer Eintauchtiefe der Pressstempel, kann rechnerisch oder messtechnisch eliminiert werden, wie bereits erläutert. Insbesondere bei dem Aufnehmen der Messwerte als Messwertkurven können diese entsprechend mit Referenzwertkurven verglichen werden.

Nach einer weiteren Ausgestaltung kann vorgesehen sein, dass die Auswerteeinrichtung bei einer Verschiebung der erhaltenen Messwerte gegenüber den Referenzwerten und/oder bei einer veränderten Amplitude der erhaltenen Messwerte gegenüber den Referenzwerten und/oder bei einer veränderten Steigung der erhaltenen Messwerte gegenüber den Referenzwerten einen erhöhten Verschleiß der Komponente feststellt. Dabei ist erkannt worden, dass eine insbesondere zeitliche Verschiebung des hochfrequenten Vibrationssignals bzw. des hochfrequenten Ausstoßkraftsignals mit dem Verschleißgrad einer Auswerferkurve der Rundläuferpresse korreliert. Neben der Verschiebung ist auch die Höhe oder die Form von Maxima in dem hochfrequenten Vibrations- bzw. Ausstoßkraftsignal ein den Verschleißzustand anzeigender Parameter. Beispielsweise mit Blick auf die Auswerferkurve ändert sich durch eine Abnutzung durch häufigen kraftintensiven Kontakt mit Stempelköpfen der Aufprallwinkel der Pressstempel an der rampenartigen Auswerferkurve. Dies führt zu einer entsprechenden Verschiebung bzw. veränderten Form der Maxima in den entsprechenden Messwertkurven. Ein Verschleiß der Auswerferkurve lässt sich außerdem anhand einer Veränderung der Beschleunigung sowie der Höhe der Amplitude des Vibrationssignals und/oder des Ausstoßkraftsignals erkennen. Dies kann ebenfalls in der erläuterten Weise durch die Auswerteeinrichtung berücksichtigt werden.

Nach einer weiteren Ausgestaltung kann die Auswerteeinrichtung einen erhöhten Verschleiß der Komponente feststellen, wenn die erhaltenen Messwerte um mindestens einen vorgegebenen Grenzwert von den Referenzwerten abweichen. Der mindestens eine vorgegebene Grenzwert kann durch eine Bedienperson vorgegeben und/oder angepasst werden. Alternativ oder zusätzlich kann der mindestens eine vorgegebene Grenzwert durch einen Algorithmus vorgegeben und/oder angepasst werden, insbesondere einen Algorithmus des maschinellen Lernens. Entsprechende Grenzwerte können also neben einer Bedienperson auch durch eine Software vorgegeben werden oder prozessspezifisch über Referenzwerte neuer Komponenten, zum Beispiel neuer Auswerferkurven festgelegt werden. Durch Algorithmen des maschinellen Lernens, insbesondere selbstlernende Algorithmen, können vorgegebene Grenzwerte darüber hinaus optimiert bzw. angepasst werden. Eine Bedienperson kann die Grenzwerte zum Beispiel über eine Eingabeeinrichtung der Auswerteeinrichtung eingeben bzw. nach jeweiligen Bedürfnissen anpassen. Algorithmen des maschinellen Lernens können insbesondere neuronale Netze umfassen.

Die Auswerteeinrichtung kann Ergebnisse der Bewertung des Verschleißzustands der Komponente für eine Bedienperson anzeigen. Weiterhin kann die Auswerteeinrichtung bei Feststellen eines erhöhten Verschleißes der Komponente eine Warnmeldung ausgeben. Die Anzeige der Bewertungsergebnisse bzw. die Warnmeldung kann über die bereits erwähnte Anzeigeeinrichtung der Auswerteeinrichtung angezeigt werden. Die Warnmeldung kann auch einen Vorschlag zum Reinigen und/oder zum Nachbehandeln und/oder zum Austausch der Komponente mit erhöhtem Verschleiß umfassen.

Die Rundläuferpresse, insbesondere die Auswerteeinrichtung, kann zur Durchführung des erfindungsgemäßen Verfahrens ausgebildet sein. Entsprechend kann das erfindungsgemäße Verfahren mit der erfindungsgemäßen Rundläuferpresse durchgeführt werden.

Ein Ausführungsbeispiel der Erfindung wird nachfolgend anhand von Figuren näher erläutert. Es zeigen schematisch:
- Figur 1: eine erfindungsgemäße Rundläuferpresse in abgewickelte Darstellung des Rotors,
- Figur 2: ein erstes Diagramm zur Veranschaulichung des erfindungsgemäßen Verfahrens,
- Figur 3: ein weiteres Diagramm zur Veranschaulichung des erfindungsgemäßen Verfahrens,
- Figur 4: ein weiteres Diagramm zur Veranschaulichung des erfindungsgemäßen Verfahrens,
- Figur 5: ein weiteres Diagramm zur Veranschaulichung des erfindungsgemäßen Verfahrens,

Soweit nichts anderes angegeben ist, bezeichnen in den Figuren gleiche Bezugszeichen gleiche Gegenstände.

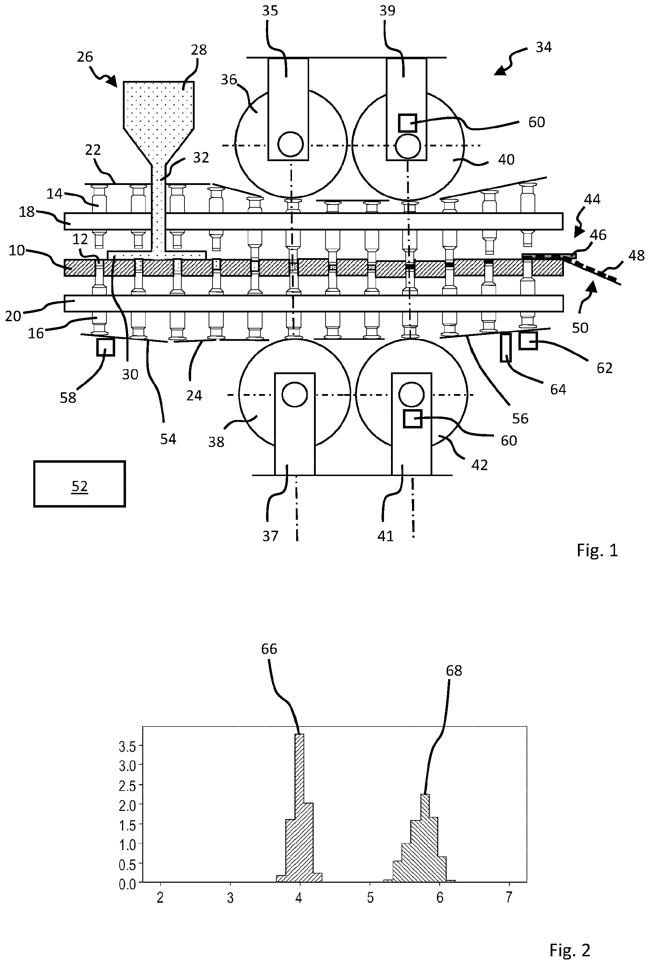

Die in Figur 1 gezeigte Rundläuferpresse ist eine Rundläuferpresse zur Tablettenherstellung, in der pulverförmiges Material zu Tabletten verpresst wird. Die Rundläuferpresse umfasst einen durch einen Drehantrieb drehend angetriebenen Rotor mit einer Matrizenscheibe 10, die eine Mehrzahl von Kavitäten 12 aufweist. Die Kavitäten 12 können beispielsweise durch Bohrungen der Matrizenscheibe 10 gebildet sein. Weiter umfasst der Rotor eine Mehrzahl von oberen Pressstempeln 14 und unteren Pressstempeln 16, die mit der Matrizenscheibe 10 synchron umlaufen. Die oberen Pressstempel 14 sind in einer oberen Stempelführung 18 axial geführt und die unteren Pressstempel 16 sind in einer unteren Stempelführung 20 axial geführt. Die axiale Bewegung der oberen Pressstempel 14 und unteren Pressstempel 16 im Zuge der Drehung des Rotors wird durch obere Steuerkurvenelemente 22 und untere Steuerkurvenelemente 24 gesteuert. Die Rundläuferpresse umfasst weiterhin eine Fülleinrichtung 26, die ein Füllreservoir 28 und eine Füllkammer 30 aufweist, die über ein Füllrohr 32 verbunden sind. Auf diese Weise gelangt in dem vorliegenden Beispiel Pulvermaterial aus dem Füllreservoir 28 über das Füllrohr 32 schwerkraftbedingt in die Füllkammer 30 und aus dieser über eine an der Unterseite der Füllkammer 30 vorgesehene Befüllöffnung wiederum schwerkraftbedingt in die Kavitäten 12 der Matrizenscheibe 10.

Die Rundläuferpresse umfasst außerdem eine Druckeinrichtung 34. Die Druckeinrichtung 34 umfasst eine Vordruckeinrichtung mit einer an einer oberen Halterung 35 gehaltenen oberen Vordruckrolle 36 und einer an einer unteren Halterung 37 gehaltenen unteren Vordruckrolle 38, sowie eine Hauptdruckeinrichtung mit einer an einer oberen Halterung 39 gehaltenen oberen Druckrolle 40 und einer an einer unteren Halterung 41 gehaltenen unteren Druckrolle 42. Darüber hinaus umfasst die Rundläuferpresse eine Auswurfeinrichtung 44 und eine Abstreifeinrichtung 46 mit einem Abstreifelement, das die in der Rundläuferpresse hergestellten Tabletten 48 einer Ablaufeinrichtung 50 zum Abführen aus der Rundläuferpresse zuführt. Die Abstreifeinrichtung 46 kann zum Beispiel ein vorzugsweise sichelförmiges Abstreifelement umfassen, das im Bereich der Auswurfeinrichtung 44 durch die unteren Pressstempel 16 auf die Oberseite der Matrizenscheibe 10 geförderte Tabletten 48 von der Matrizenscheibe 10 abstreift und der Ablaufeinrichtung 50 zuführt.

Weiterhin umfasst die Rundläuferpresse eine Auswerteeinrichtung 52 zum Steuern des Betriebs der Rundläuferpresse und zur Durchführung der erfindungsgemäßen Verfahrens, wie nachfolgend näher erläutert.

Die Steuerkurven 24 umfassen verschiedene Steuerkurvenelemente, unter anderem eine Dosierkurve 54 und eine Auswerferkurve 56. In dem dargestellten Beispiel sind an der Dosierkurve 54, der oberen und unteren Halterungen 39, 41 der oberen und unteren Druckrollen 40, 42 sowie an der Auswerferkurve 56 Vibrationssensoren 58, 60, 62 angeordnet. Die Vibrationssensoren 58, 60, 62 messen im Betrieb der Rundläuferpresse auftretende Vibrationen an den jeweiligen Komponenten, an denen sie angeordnet sind. Außerdem ist an der Auswerferkurve 56 ein Kraftsensor 64 zum Messen der im Betrieb der Rundläuferpresse durch die Pressstempel 14, 16 auf die Auswerferkurve 56 wirkenden Ausstoßkräfte angeordnet. Die im Betrieb der Rundläuferpresse durch die Vibrationssensoren 58, 60, 62 sowie den Kraftsensor 64 erfassten Messwerte werden als Messwertkurven aufgenommen und der Auswerteeinrichtung 52 zugeführt. Auf Grundlage der erhaltenen Messwertkurven bewertet die Auswerteeinrichtung 52 in dem dargestellten Beispiel den Verschleißzustand der Auswerferkurve 56 der Rundläuferpresse. Ergebnisse der Bewertung bzw. eine Warnmeldung bei erhöhtem Verschleiß können über eine Anzeigeeinrichtung der Auswerteeinrichtung 52 ausgegeben werden. Diese kann in die Auswerteeinrichtung 52 integriert sein oder beispielsweise durch einen Computer, ein Tablet oder ein Smartphone gebildet sein. Die Auswerteeinrichtung 52 umfasst auch eine Eingabeeinrichtung, über die eine Bedienperson Parameter für die Zustandsbewertung der Auswerteeinrichtung 52, wie zum Beispiel Grenzwerte für Abweichungen von Referenzwertkurven, eingeben kann. Die Eingabeeinrichtung kann ebenfalls in die Auswerteeinrichtung 52 integriert sein oder getrennt von dieser ausgebildet sein, zum Beispiel auf einem Computer, einem Tablet oder einem Smartphone.

In dem dargestellten Beispiel vergleicht die Auswerteeinrichtung 52 die aufgenommenen Messwertkurven der Vibrationssensoren 58, 60, 62 und des Kraftsensors 64 mit Referenzwertkurven, die beispielsweise anhand einer neuen und somit nicht verschlissenen Auswerferkurve 56 experimentell erstellt worden sein können. Die Referenzwertkurven können für die zu bewertende Rundläuferpresse oder für eine andere Rundläuferpresse desselben Typs erstellt worden sein. Insbesondere kann die Auswerteeinrichtung 52 bei einer zum Beispiel zeitlichen Verschiebung der erhaltenen Messwertkurven gegenüber den Referenzwertkurven und/oder bei einer veränderten Amplitude der erhaltenen Messwertkurven gegenüber den Referenzwertkurven, insbesondere einem veränderten Maximum, und/oder bei einer veränderten Steigung der erhaltenen Messwertkurven gegenüber den Referenzwertkurven, insbesondere einer veränderten Steigung von Amplituden oder Maxima, einen erhöhten Verschleiß der Auswerferkurve 56 feststellen.

Dies soll anhand der Diagramme der Figuren 2 bis 5 beispielhaft erläutert werden. In Figur 2 ist bei dem Bezugszeichen 66 die Vibrationsfrequenz der im Betrieb der Rundläuferpresse auftretenden Vibrationen, wie durch den an der Auswerferkurve 56 angeordneten Vibrationssensor 62 gemessen, über der Vibrationsbeschleunigung aufgetragen, jeweils in beliebigen Einheiten. Entsprechende Referenzwerte sind in Figur 2 bei dem Bezugszeichen 68 dargestellt. Dabei ist erkennbar, dass einerseits die Amplitude bzw. das Maximum der durch den Vibrationssensor 62 gemessenen Vibrationssignale höher ist als bei den Referenzwerten und außerdem die Vibrationsbeschleunigung geringer. Diese Abweichungen der aufgenommenen Messwerte gegenüber den Referenzwerten werden durch die Auswerteeinrichtung 52 mit entsprechend vorgegebenen Grenzwerten verglichen. Sofern die Abweichungen die Grenzwerte überschreiten, bewertet die Auswerteeinrichtung 52 die Auswerferkurve 56 als mit erhöhtem Verschleiß.

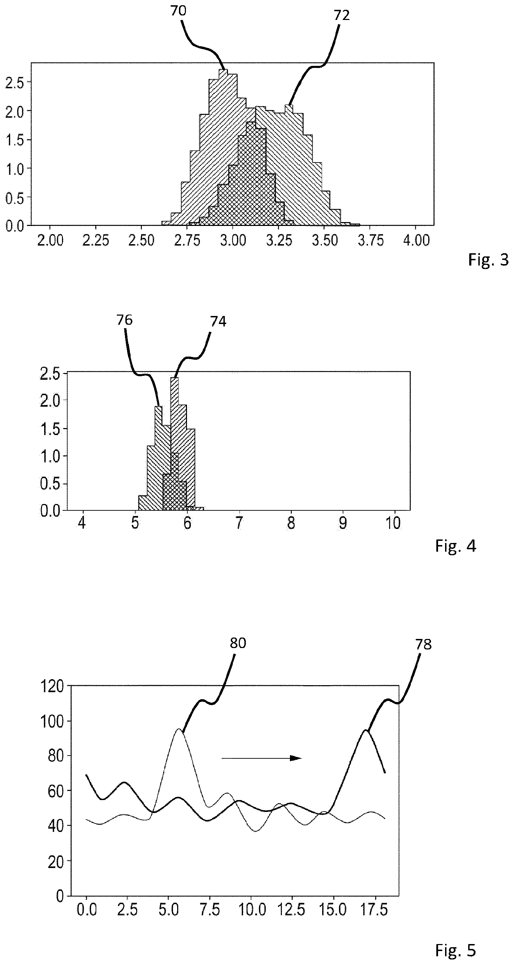

Figur 3 zeigt ein Figur 2 entsprechendes Diagramm, wobei in diesem Fall bei dem Bezugszeichen 70 die durch den an der Dosierkurve 54 angeordneten Vibrationssensor 58 aufgenommenen Messwerte mit entsprechenden Referenzwerten, aufgetragen bei dem Bezugszeichen 72 verglichen sind. Eine Überschneidung zwischen den Kurven 70 und 72 ist kreuzschraffiert dargestellt. Die in Figur 2 zu erkennenden Abweichungen sind auch in Figur 3 zu erkennen, wenn auch aufgrund der Anordnung des Vibrationssensors 58 an der Dosierkurve 54 weniger ausgeprägt. In gleicher Weise wie zu Figur 2 erläutert, kann die Auswerteeinrichtung 52 den Verschleißzustand der Auswerferkurve 56 auch auf Grundlage der Messwerte des Vibrationssensors 58 bewerten.

Figur 4 zeigt ein gegenüber den Figuren 2 und 3 leicht abgewandeltes Diagramm für durch den an der oberen Druckrolle 40 angeordneten Vibrationssensor 60 aufgenommene Messwerte. So ist in Figur 4 die Vibrationsfrequenz über der Vibrationsgeschwindigkeit aufgetragen, wiederum jeweils in beliebigen Einheiten. Die durch den Vibrationssensor 60 aufgenommenen Messwerte sind bei dem Bezugszeichen 74 dargestellt. Entsprechende Referenzwerte für eine neue Auswerferkurve 56 sind bei dem Bezugszeichen 76 dargestellt. Eine Überschneidung zwischen den Kurven 74 und 76 ist wiederum kreuzschraffiert dargestellt. Wieder ergeben sich durch die Auswerteeinrichtung 52 erkennbare und mit entsprechenden Grenzwerten vergleichbare Abweichungen zwischen den Messwerten. So ist wiederum die Frequenzamplitude bzw. das Frequenzmaximum der Messwerte 74 höher als bei den Referenzwerten 76. Außerdem ist die Vibrationsgeschwindigkeit größer als bei den Referenzwerten. Durch Vergleich mit entsprechend vorgegebenen Grenzwerten kann die Auswerteeinrichtung 52 einen erhöhten Verschleiß feststellen.

In Figur 5 sind bei dem Bezugszeichen 78 eine Messwertkurve der durch den an der Auswerferkurve 56 angeordneten Kraftsensor 64 aufgenommenen Ausstoßkräfte über der Zeit sowie bei dem Bezugszeichen 80 eine entsprechende Referenzwertkurve für eine neue Auswerferkurve 56 aufgetragen. Dabei ist gut zu erkennen, dass sich eine zeitliche Verschiebung der durch den Kraftsensor 64 aufgenommenen Messwertkurve 78 gegenüber der Referenzwertkurve 80 ergibt. Die Amplitude der Messwertkurven verändert sich hingegen nicht wesentlich. Wiederum kann ein Grenzwert für die zeitliche Verschiebung der Messwertkurve 78 gegenüber der Referenzwertkurve 80 vorgegeben werden und die Auswerteeinrichtung 52 kann auf dieser Grundlage einen erhöhten Verschleiß der Auswerferkurve 56 feststellen.

Obgleich die Erfindung anhand des Ausführungsbeispiels für die Bewertung des Verschleißzustands der Auswerferkurve 56 erläutert wurde, versteht sich, dass entsprechend auch andere Komponenten der Rundläuferpresse hinsichtlich ihres Verschleißzustands bewertet werden können.

### Bezugszeichenliste

- 10: Matrizenscheibe
- 12: Kavitäten
- 14: Oberer Pressstempel
- 16: Unterer Pressstempel
- 18: Obere Stempelführung
- 20: Untere Stempelführung
- 22: Obere Steuerkurvenelemente
- 24: Untere Steuerkurvenelemente
- 26: Fülleinrichtung
- 28: Füllreservoir
- 30: Füllkammer
- 32: Füllrohr
- 34: Druckeinrichtung
- 35: Obere Halterung
- 36: Obere Vordruckrolle
- 37: Untere Halterung
- 38: Untere Vordruckrolle
- 39: Obere Halterung
- 40: Obere Druckrolle
- 41: Untere Halterung
- 42: Untere Druckrolle
- 44: Auswurfeinrichtung
- 46: Abstreifeinrichtung
- 48: Tabletten
- 50: Ablaufeinrichtung
- 52: Auswerteeinrichtung
- 54: Dosierkurve
- 56: Auswerferkurve
- 58: Vibrationssensor
- 60: Vibrationssensor
- 62: Vibrationssensor
- 64: Kraftsensor
- 66: Messwerte
- 68: Referenzwerte
- 70: Messwerte
- 72: Referenzwerte
- 74: Messwerte
- 76: Referenzwerte
- 78: Messwerte
- 80: Referenzwerte

## Patentansprüche

1. Verfahren zum Bewerten des Verschleißzustands einer Komponente einer Rundläuferpresse, wobei die Rundläuferpresse einen mittels eines Drehantriebs drehbaren Rotor umfasst, wobei der Rotor eine obere Stempelführung (18) für obere Pressstempel (14) und eine untere Stempelführung (20) für untere Pressstempel (16) sowie eine zwischen den Stempelführungen angeordnete Matrizenscheibe (10) aufweist, wobei die Pressstempel (14, 16) mit Kavitäten (12) der Matrizenscheibe (10) zusammenwirken, wobei die Rundläuferpresse weiter eine Fülleinrichtung (26) umfasst, durch die zu verpressendes Pulvermaterial in die Kavitäten (12) der Matrizenscheibe (10) gefüllt wird, wobei die Rundläuferpresse eine Druckeinrichtung (34) umfasst, die im Betrieb mit den oberen Pressstempeln (14) und mit den unteren Pressstempeln (16) zum Verpressen des Pulvermaterials in den Kavitäten (12) der Matrizenscheibe (10) zu Presslingen zusammenwirkt, und wobei die Rundläuferpresse mit Stempelköpfen der Pressstempel (14, 16) zusammenwirkende Steuerkurven zum Steuern einer axialen Bewegung der Pressstempel (14, 16) aufweist, wobei die Steuerkurven eine Auswerferkurve (56) umfassen, die die unteren Pressstempel zum Auswerfen von in den Kavitäten (12) erzeugten Presslingen aus den Kavitäten (12) steuern wobei das Verfahren durch die folgenden Schritte gekennzeichnet ist:
• mit mindestens einem Kraftsensor (64) werden im Betrieb der Rundläuferpresse auf die Auswerferkurve (56) wirkenden Ausstoßkräfte als Messwerte gemessen und/oder mit mindestens einem Vibrationssensor (58, 60, 62) werden im Betrieb der Rundläuferpresse auftretende Vibrationen als Messwerte gemessen,
• die Messwerte werden einer Auswerteeinrichtung (52) zugeführt und durch die Auswerteeinrichtung (52) wird auf Grundlage der erhaltenen Messwerte der Verschleißzustand einer Komponente der Rundläuferpresse bewertet.

2. Verfahren nach einem der vorhergehenden Ansprüche, **dadurch gekennzeichnet, dass** durch die Auswerteeinrichtung (52) der Verschleißzustand der Auswerferkurve (56) bewertet wird.

3. Verfahren nach einem der vorhergehenden Ansprüche, **dadurch gekennzeichnet, dass** ein Kraftsensor (64) an der Auswerferkurve (56) angeordnet ist.

4. Verfahren nach einem der vorhergehenden Ansprüche, **dadurch gekennzeichnet, dass** ein Vibrationssensor (58, 60, 62) an der Auswerferkurve (56) und/oder an der Druckeinrichtung (34), insbesondere einer Druckrolle (40, 42) der Druckeinrichtung (34) und/oder einer Halterung (39, 41) einer Druckrolle (40, 42) der Druckeinrichtung (34), und/oder an einer Dosierkurve (54) der Steuerkurven zum Dosieren des in die Kavitäten (12) der Matrizenscheibe (10) gefüllten Pulvermaterials angeordnet ist.

5. Verfahren nach einem der vorhergehenden Ansprüche, **dadurch gekennzeichnet, dass** die Messwerte als Messwertkurve aufgenommen werden, insbesondere als zeitabhängige Messwertkurve.

6. Verfahren nach einem der vorhergehenden Ansprüche, **dadurch gekennzeichnet, dass** der Verschleißzustand der Komponente durch die Auswerteeinrichtung (52) auf Grundlage eines Vergleichs der erhaltenen Messwerte mit Referenzwerten bewertet wird.

7. Verfahren nach Anspruch 6, **dadurch gekennzeichnet, dass** die Auswerteeinrichtung (52) bei einer Verschiebung der erhaltenen Messwerte gegenüber den Referenzwerten und/oder bei einer veränderten Amplitude der erhaltenen Messwerte gegenüber den Referenzwerten und/oder bei einer veränderten Steigung der erhaltenen Messwerte gegenüber den Referenzwerten einen erhöhten Verschleiß der Komponente feststellt.

8. Verfahren nach einem der Ansprüche 6 oder 7, **dadurch gekennzeichnet, dass** die Auswerteeinrichtung (52) einen erhöhten Verschleiß der Komponente feststellt, wenn die erhaltenen Messwerte um mindestens einen vorgegebenen Grenzwert von den Referenzwerten abweichen.

9. Verfahren nach Anspruch 8, **dadurch gekennzeichnet, dass** der mindestens eine vorgegebene Grenzwert durch eine Bedienperson vorgegeben und/oder angepasst wird und/oder dass der mindestens eine vorgegebene Grenzwert durch einen Algorithmus vorgegeben und/oder angepasst wird, insbesondere einen Algorithmus des maschinellen Lernens.

10. Verfahren nach einem der vorhergehenden Ansprüche, **dadurch gekennzeichnet, dass** die Auswerteeinrichtung (52) Ergebnisse der Bewertung des Verschleißzustands der Komponente für eine Bedienperson anzeigt.

11. Verfahren nach einem der vorhergehenden Ansprüche, **dadurch gekennzeichnet, dass** die Auswerteeinrichtung (52) bei Feststellen eines erhöhten Verschleißes der Komponente eine Warnmeldung ausgibt.

12. Verfahren nach Anspruch 11, **dadurch gekennzeichnet, dass** die Warnmeldung einen Vorschlag zum Reinigen und/oder zum Nachbehandeln und/oder zum Austausch der Komponente mit erhöhtem Verschleiß umfasst.

13. Rundläuferpresse, umfassend einen Rotor mit einer oberen Stempelführung (18) für obere Pressstempel (14) und einer unteren Stempelführung (20) für untere Pressstempel (16) sowie einer zwischen den Stempelführungen angeordneten Matrizenscheibe (10), wobei die Pressstempel (14, 16) mit Kavitäten (12) der Matrizenscheibe (10) zusammenwirken, weiter umfassend eine Fülleinrichtung (26), durch die zu verpressendes Pulvermaterial in die Kavitäten (12) der Matrizenscheibe (10) gefüllt wird, weiter umfassend eine Druckeinrichtung (34), die im Betrieb mit den oberen Pressstempeln (14) und mit den unteren Pressstempeln (16) zum Verpressen des Pulvermaterials in den Kavitäten (12) der Matrizenscheibe (10) zu Presslingen zusammenwirkt, und weiter umfassend mit Stempelköpfen der Pressstempel (14, 16) zusammenwirkende Steuerkurven zum Steuern einer axialen Bewegung der Pressstempel (14, 16), wobei die Steuerkurven eine Auswerferkurve (56) umfassen, die die unteren Pressstempel (16) zum Auswerfen von in den Kavitäten (12) erzeugten Presslingen aus den Kavitäten (12) steuern, **dadurch gekennzeichnet,**
• **dass** die Rundläuferpresse mindestens einen Kraftsensor (64) umfasst, mit dem im Betrieb der Rundläuferpresse auf die Auswerferkurve (56) wirkenden Ausstoßkräfte als Messwerte messbar sind und/oder dass die Rundläuferpresse mindestens einen Vibrationssensor (58, 60, 62) umfasst, mit dem im Betrieb der Rundläuferpresse auftretende Vibrationen als Messwerte messbar sind, und
• **dass** eine Auswerteeinrichtung (52) vorgesehen ist, an der die Messwerte anliegen, und die dazu ausgebildet ist, auf Grundlage der erhaltenen Messwerte den Verschleißzustand einer Komponente der Rundläuferpresse zu bewerten.

14. Rundläuferpresse nach Anspruch 13, **dadurch gekennzeichnet, dass** ein Kraftsensor (64) an der Auswerferkurve (56) angeordnet ist.

15. Rundläuferpresse nach einem der Ansprüche 13 oder 14, **dadurch gekennzeichnet, dass** ein Vibrationssensor (58, 60, 62) an der Auswerferkurve (56) und/oder an der Druckeinrichtung (34), insbesondere einer Druckrolle (40, 42) der Druckeinrichtung (34), und/oder an einer Dosierkurve (54) der Steuerkurven zum Dosieren des in die Kavitäten (12) der Matrizenscheibe (10) gefüllten Pulvermaterials angeordnet ist.

16. Rundläuferpresse nach einem der Ansprüche 13 bis 15, **dadurch gekennzeichnet, dass** die Rundläuferpresse, insbesondere die Auswerteeinrichtung (52), zur Durchführung des Verfahrens nach einem der Ansprüche 1 bis 12 ausgebildet ist.
